**Europäisches Patentamt**

**European Patent Office**

**Office européen des brevets**

(19)

(11) Veröffentlichungsnummer: **0 303 156 B1**

(12)                    **EUROPÄISCHE PATENTSCHRIFT**

(45) Veröffentlichungstag der Patentschrift :
29.05.91 Patentblatt 91/22

(51) Int. Cl.[5] : **G01P 5/00**

(21) Anmeldenummer : 88112526.4

(22) Anmeldetag : 02.08.88

(54) **Verfahren für die Laser-Doppler-Anemometrie.**

(30) Priorität : 07.08.87 EP 87111427

(43) Veröffentlichungstag der Anmeldung :
15.02.89 Patentblatt 89/07

(45) Bekanntmachung des Hinweises auf die
Patenterteilung :
29.05.91 Patentblatt 91/22

(84) Benannte Vertragsstaaten :
**CH DE FR GB IT LI SE**

(56) Entgegenhaltungen :
DE-A- 3 435 423
FR-A- 2 582 403
US-A- 4 036 557
THIRD INTERNATIONAL SYMPOSIUM ON AP-
PLICATIONS OF LASER ANEMOMETRY TO
FLUID MECHANICS, Lissabon, 7.-9. Juli 1986,
Teil 8.2, Seiten 1-8; D. DOPHEIDE et al.: "Laser
Doppler anemometry using laser diodes and
solid-state photodetectors"
THIRD INTERNATIONAL SYMPOSIUM ON AP-
PLICATIONS OF LASER ANEMOMETRY TO
FLUID MECHANICS, Lissabon, 7.-9. Juli 1986,
Teil 3.8, Seiten 1-5; E. SOMMER et al.: "LDA
system for long-range cross-wind velocity measurements using pulsed laser radiation"
APPLIED PHYSICS LETTERS, Band 33, Nr. 9, 1.
November 1978, Seiten 835,836, American Institute of Physics, New York, US; E.J.
SHAUGHNESSY et al.: "GaAlAs diode sources
for laser-Doppler anemometry"

(56) Entgegenhaltungen :
ICIASF '85 RECORD, INTERNATIONAL CON-
GRESS ON INSTRUMENTATION IN AERO-
SPACE SIMULATION FACILITIES, Stanford
University, 26.-28. August 1985, Seiten
309-312, IEEE; D. PALLEK: "Fast digital data
acquisition and analysis of LDA signals by
means of a transient recorder and an array
processor"

(73) Patentinhaber : **Bundesrepublik Deutschland,
vertreten durch den Bundesminister für
Wirtschaft, dieser vertreten durch den
Präsidenten
der Physikalisch-Technischen Bundesanstalt
Bundesallee 100
W-3300 Braunschweig (DE)**
Patentinhaber : **Deutsch-Französisches
Forschungsinstitut (I.S.L.)
12, rue de l'Industrie
F-68301 Saint-Louis (FR)**

(72) Erfinder : **Dopheide, Dietrich, Dr.**
**Leimenweg 7**
**W-3300 Braunschweig (DE)**
Erfinder : **Faber, Michael**
**Wilhelmshavener Strasse 27**
**W-3300 Braunschweig (DE)**
Erfinder : **Taux, Guenter**
**Weinbergstrasse 9**
**W-3300 Braunschweig (DE)**
Erfinder : **Pfeifer, Hans-Joachim, Dr.**
**Huetzenweg 3**
**W-7851 Ruemmingen (DE)**
Erfinder : **Reim, Gerhard**
**Suhkamp 9**
**W-3301 Rothemuehle (DE)**

(74) Vertreter : **Lins, Edgar, Dipl.-Phys. et al**
**Patentanwälte Gramm + Lins**
**Theodor-Heuss-Strasse 2**
**W-3300 Braunschweig (DE)**

## Beschreibung

Die Erfindung betrifft ein Verfahren für die Laser-Doppler-Anemometrie mit wenigstens zwei, von einer Laserlichtquelle erzeugten Laserstrahlen, die gemeinsam auf einen Bereich einer partikelenthaltenden Strömung eines Fluids gerichtet werden und deren Streulicht, dessen Frequenz aufgrund der Strömungsgeschwindigkeit um die Dopplerfrequenz verschoben ist, gemessen wird, wobei die Laserstrahlen gepulst ausgesandt werden.

Laser-Doppler-Anemometer sind seit längerer Zeit bekannt. Sie dienen zur praktisch rückwirkungsfreien Messung von Strömungsgeschwindigkeiten von Fluiden, die Partikel enthalten. Die beiden Strahlen der Laserlichtquelle erzeugen im Bereich der Strömung ein virtuelles Interferenzmuster, das von den Partikeln des Fluids durchlaufen wird. Das dadurch entstehende Streulicht ist in seiner Frequenz um die Dopplerfrequenz gegenüber der Ausgangsfrequenz der Laser-Lichtquelle verschoben.

Zur Realisierung von Laser-Doppler-Anemometern sind üblicherweise kontinuierlich strahlende Laserlichtquellen eingesetzt worden. Soweit gepulste Laser, z.B. gepulste Laserdioden (vgl. US-PS 4,036,557) verwendet worden sind, ist die Pulsdauer wesentlich größer als die "transit-time" gewählt worden, also die Zeit, die ein Partikel benötigt, um den Meßbereich zu durchqueren.

Kontinuierlich strahlende Laser, die zur Erzeugung eines guten Signal-Rausch-Verhältnisses für die Meßsignale eine hohe Ausgangsleistung haben, sind relativ voluminöse Geräte, so daß ein aufwendiger und schwer handzuhabender Meßaufbau erforderlich ist. Kontinuierlich strahlende Laserdioden, die für die Laser-Anemometrie eingesetzt worden sing (DE-OS 34 35 423) verfügen über eine relativ schwache Ausgangsleistung, so daß das Signal-Rausch-Verhältnis der Meßsignale den Einsatz des entsprechenden Geräts ohne aufwendige Zusatzmaßnahmen nur für bestimmte Anwendungsgebiete ermöglicht. Gleiches gilt im Prinzip für die bisher vorgeschlagenen gepulsten Laserdioden, wobei die Auswertung deren Meßsignale zu erheblichen Problemen führte.

Der Erfindung liegt die Aufgabe zugrunde, ein Verfahren für die Laser-Doppler-Anemometrie der eingangs erwähnten Art so auszubilden, daß ein verbessertes Signal-Rausch-Verhältnis für die Meßsignale erzeugt wird, so daß auch mit kompakten Geräten ein weiter Anwendungsbereich erschlossen wird.

Diese Aufgabe wird erfindungsgemäß mit einem Verfahren für die Laser-Doppler-Anemometrie der eingangs erwähnten Art dadurch gelöst, daß die Pulsfolgefrequenz der Laserstrahlen auf ein Vielfaches der zu beobachtenden Doppler-Frequenz eingestellt wird.

Der Unterschied zur bekannten Laser-Doppler-Anemometrie besteht darin, daß sehr hochfrequent gepulste Laserstrahlen verwendet werden, bei denen die Impulse eine Pulsfolgefrequenz von einem Vielfachen, vorzugsweise zwischen dem Fünf- und Zwanzigfachen, der Dopplerfrequenz aufweisen, so daß die Impulsdauer nur einen kleinen Bruchteil der "transit-time" der Partikel aufweist.

Einige Laser, insbesondere Halbleiterlaser können nämlich im hochfrequenten Impulsbetrieb bedeutend mehr Photonen pro Sekunde emittieren als im kontinuierlichen Betrieb oder beim Betrieb mit langen Impulsen.

Im gleichen Maße steigt damit erfindungsgemäß das Signal-Rausch-Verhältnis im Vergleich zum bisher in der LDA-Technik verwendeten kontinuierlichen Betrieb oder zum Betrieb mit langen Laserimpulsen.

Demzufolge wird das Doppler-Meßsignal (virtuelle Interferenzstreifenmuster) immer nur kurzzeitig während der Dauer der Laserimpulse abgetastet. Aus den Amplitudenwerten der entsprechenden Streulichtimpulse und deren zeitlichen Abstand, die demgemäß Momentanwerte des Dopplerfrequenzsignals darstellen, kann das Dopplerfrequenzsignal ohne weiteres rekonstruiert werden.

Eine einfache Methode zur Auswertung der hochfrequenten Meßsignale besteht darin, daß die empfangenen Streulichtimpulse in einem Integrator zu einem kontinuierlichen analogen Meßsignal geformt werden. Die Auswertemethode entspricht daher der Auswertung von Meßsignalen, die bei kontinuierlich strahlenden Laserlichtquellen entstehen.

In einer alternativen und hinsichtlich der Meßsignalintensität noch vorteilhafteren Auswertemethode wird das Meßsignal auf eine Auswertungseinrichtung geleitet, die eine Amplitudenmeßeinrichtung für die jeweiligen Streulichtimpulse aufweist und die gemessenen Amplituden rechnerisch auswertet. Hierfür bietet sich insbesondere eine Amplitudenmeßeinrichtung an, die aufgrund eines Synchronimpulses die Amplitudenmessung des am Eingang anstehenden Streulichtimpulses vornimmt. Dabei ist zweckmäßigerweise der Synchronimpuls und der Laserimpuls von einem gemeinsamen hochfrequenten Impulsgenerator abgeleitet. Bei der letztgenannten Auswertungsmethode entstehen keine Intensitätsverluste für das Meßsignal durch die zeitliche Mittelung. Vielmehr wird mit den momentanen Amplitudenmeßwerten rechnerisch das Doppler-Meßsignal ermittelt und dessen Frequenz, die eine Auskunft über die Strömungsgeschwindigkeit gibt, festgestellt.

Eine außerordentlich bevorzugte Anwendung der erfindungsgemäßen Lehre ergibt sich beim Einsatz von Laserdioden. In einer bevorzugten Ausführungsform wird die Laserlichtquelle daher durch eine Laserdiode gebildet. Selbstverständlich kann die Laserlichtquelle auch durch mehrere Laserdioden gebildet sein.

Die hochfrequenten Laserimpulse weisen eine extrem kurze Pulsdauer auf, so daß die Lichtintensität erheblich gesteigert wird. Durch die Pulsmodulation der Diode kann die optische Ausgangsleistung im zeitlichen Mittel um etliche Faktoren gesteigert werden.

Durch die Verwindung der hochfrequenten Laserimpulse ist es möglich, mehrere Geschwindigkeitskomponenten der Strömung gleichzeitig ohne eine gegenseitige Beeinflussung zu messen, wenn mehrere Laserlichtquellen für mehrere Geschwindigkeitskomponenten vorgesehen sind und wenn die mehreren Lichtquellen jeweils phasenverschobene Impulse derart ausstrahlen, daß zu jedem Zeitpunkt nur eine Laserlichtquelle strahlt. Die für zwei oder drei Geschwindigkeitskomponenten vorgesehenen zwei oder drei Laserlichtquellen strahlen dann jeweils in den Impulspausen der anderen Laserlichtquelle (n) einen Impuls aus. Die Auswertungseinrichtung erkennt die Amplituden der einzelnen, jeweils zu einer Geschwindigkeitskomponente gehörenden Impulse und bildet hieraus das zu jeder Geschwindigkeitskomponente gehörende Dopplersignal. Da die Aussendung der Laserlichtimpulse in den Impulspausen der anderen Laserlichtquellen für die anderen Geschwindigkeitskomponenten erfolgt, ist eine Rückwirkungsfreiheit zwischen den Signalen der verschiedenen Geschwindigkeitskomponenten gewährleistet.

Diese Methode ermöglicht es, alle Signale der verschiedenen Geschwindigkeitskomponenten mit einer einzigen Empfangsoptik aufzunehmen und elektronisch für jede Komponente zu sortieren.

Die Erfindung soll im folgenden anhand von in der Zeichnung dargestellten Ausführungsbeispielen näher erläutert werden. Es zeigen :

Figur 1 – schematisch den Aufbau eines Laser-Doppler-Anemometers mit einer Laserdiode als Laserlichtquelle und einer einen Integrator enthaltenden Auswertungseinrichtung

Figur 2 – einen analogen Aufbau wie in Figur 1 mit einer Amplitudenmeßeinrichtung für die kurzzeitigen Streulichtimpulse

Figur 3 – einen schematischen Aufbau eines Laser-Doppler-Anemometers gemäß Figur 2 mit mehreren Laserlichtquellen für mehrere Geschwindigkeitskomponenten

Figur 4 – einen Aufbau gemäß Figur 3 mit einer anderen Ansteuerung der verschiedenen Laserlichtquellen.

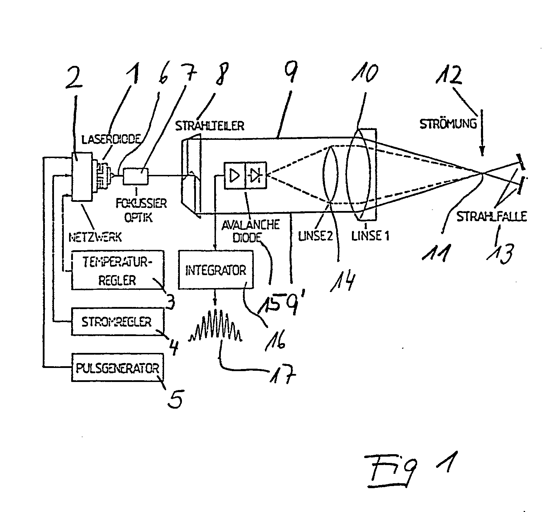

In dem in Figur 1 dargestellten Ausführungsbeispiel wird eine Laserdiode 1 von einem Netzwerk 2 angesteuert. Zur Wellenlängenregelung der Laserdiode 1 ist das Netzwerk 2 mit einem Temperaturregler 3 und einem Stromregler 4 verbunden. Durch die Strom- und Temperaturstabilisierung wird die Wellenlänge der von der Laserdiode 1 ausgesandten Strahlen konstantgehalten. An das Netzwerk 2 ist ferner ein Pulsgenerator 5 angeschlossen, der die Laserdiode 1 veranlaßt, Laserimpulse mit einer extrem kurzen Pulsdauer auszusenden. Der von der Laserdiode 1 ausgestrahlte Laserstrahl 6 wird von einer Fokussieroptik 7 fokussiert und anschließend in einem Strahlteiler 8 in zwei Teilstrahlen 9, 9' aufgeteilt, die parallel zueinander laufen. Eine Sammellinse 10 (Linse 1) führt die beiden Teilstrahlen 9, 9' in einem punktförmigen Fleck 11 (Schnittvolumen), zusammen, der innerhalb der Strömung 12 des mit Partikeln versehenen Fluids liegt. Die durch die Strömung 12 hindurchgetretenen Teilstrahlen 9, 9' werden von einer Strahlfalle 13 absorbiert, um die Messung nicht zu stören.

Das in dem dargestellten Ausführungsbeispiel rückwärts von den strömenden Partikeln gestreute Licht wird von einer Fokussierlinse 14 (Linse 2), die in der optischen Achse der ersten Linse 10 angeordnet ist, so fokussiert, daß es auf eine Avalanche-Diode 15 als Fotodetektor fällt. Das von der Avalanche-Diode 15 erzeugte elektrische Signal gelangt auf einen Integrator 16, der das Meßsignal zu einem kontinuierlichen analogen LDA-Signal 17 formt.

Die weitere Auswertung erfolgt in üblicher, für die Anemometrie mit kontinuierlich strahlenden Laserlichtquellen bekannter Weise.

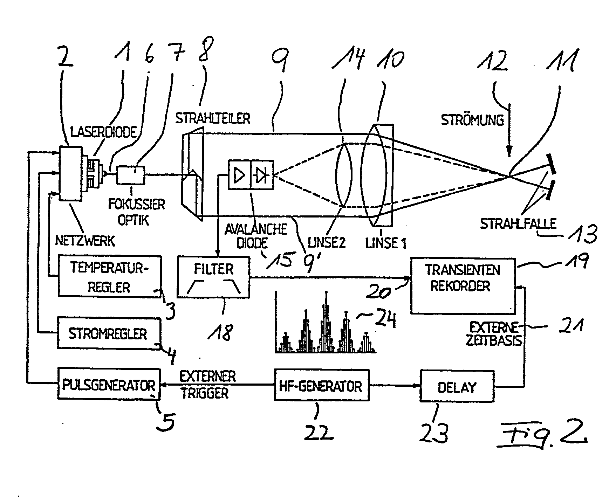

Das in Figur 2 dargestellte Ausführungsbeispiel entspricht in allen wesentlichen Teilen des Meßaufbaus dem oben beschriebenen Aufbau, so daß die gleichen Bezugsziffern für die gleichen Teile verwendet worden sind. Unterschiede ergeben sich lediglich durch die an den Ausgang der Avalanche-Diode 15 angeschlossene Auswertungseinrichtung. Über ein zur Störbefreiung dienendes Filter 18 gelangen Ausgangsimpulse der Avalanche-Diode 15 auf einen Transientenrekorder 19, der im wesentlichen einen schnellen Analog-Digital-Wandler darstellt, der die analoge Amplitude des an seinem einen Eingang 20 (Signal-Eingang) stehenden Meßsignal mißt und digitalisiert, wenn an einer externen Zeitbasis 21 ein Triggerimpuls ansteht. Dieser Triggerimpuls wird durch einen Hochfrequenzgenerator 22 erzeugt und gelangt über eine Verzögerungsschaltung 23 auf den Eingang der externen Zeitbasis 21.

Der Hochfrequenzgenerator 22 dient zugleich als Generator für Triggerimpulse für den Pulsgenerator 5, so daß die Erzeugung der Laserimpulse mit Hilfe des Pulsgenerators 5 und die Erzeugung der Triggerimpulse für den Transientenrekorder 19 synchron aus derselben Impulsquelle, nämlich dem Hochfrequenzgenerator 22, erfolgt. Die zwischen dem Hochfrequenzgenerator 22 und dem Transientenrekorder 19 eingeschaltete Verzögerungsschaltung 23 berücksichtigt die zeitverzögerung zwischen dem Aussenden des Laserimpulses durch die Laserdiode 1 und der Ausbildung des Meßimpulses am Ausgang der Avalanche-Diode 15, so daß der Triggerimpuls an der externen Zeitbasis 21 des Transientenrekorders 19 phasenrichtig mit dem Erscheinen des Meßimpulses am Signal-Eingang 20 des Transientenrekorders 19 entsteht. In der Zeichnung sind schematisch einige Perioden eines Doppler-Meßsignals 24 dargestellt. Das Doppler-Meßsignal 24 wird durch die Aneinanderreihung einer Vielzahl (z.B. dreißig) von Amplituden von kurzzeitigen Meßimpulsen zusammengesetzt und erkennbar. Durch die Laserimpulse wird daher das Doppler-Meßsignal 24 punktweise abgetastet und ermittelt. Diese Ermittlung kann, wie Figur 2 zeigt, grafisch, vorzugsweise aber durch einen Rechner erfolgen.

Im Rechner können durch eine digitale Filterung der gemessenen Streulichtpulse die Signal-Rausch-Verhältnisse weiter verbessert werden. Die Bestimmung der Dopplerfrequenz erfolgt entweder im Zeitbereich durch Nullstellenbestimmung oder im Frequenzbereich durch eine Fourier-Transformation (FFT). ·

Für eine Dopplerfrequenz von z.B. 2 MHz wird beispielsweise eine Pulsfolgefrequenz von 10 bis 50 MHz mit Pulsdauern von 40 ns bis 5 ns eingestellt. Das Verhältnis von Dopplerfrequenz und Pulsfrequenz hängt ab von der Art der Signalauswertung und vom Typ der verwendeten Laserdiode. Zur optimierung des Signal-Rausch-Verhältnisses müssen die geeigneten Betriebsparameter experimentell ermittelt werden.

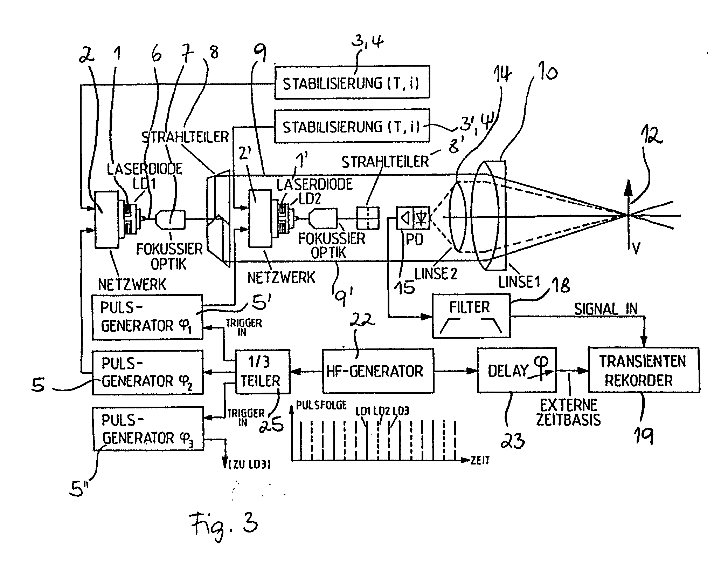

Figur 3 zeigt eine Anordnung, die für drei Laserlichtquellen vorgesehen ist. Neben einer ersten Laserlichtquelle 1 ist eine zweite Laserlichtquelle 1′ eingezeichnet, während eine dritte Laserlichtquelle aus Gründen der Übersichtlichkeit nicht mehr dargestellt ist. Für die drei Laserlichtquellen 1′, 1′ sind drei Impulsgeneratoren 5, 5′, 5″ vorgesehen, die mit dem Hochfrequenz generator 22 über einen Frequenzteiler 25 verbunden sind. Der Frequenzteiler teilt durch drei und triggert die drei Impulsgeneratoren 5, 5′, 5″ zyklisch. Die drei Laserlichtquellen 1, 1′ strahlen demzufolge hochfrequente Impulse mit einer Frequenz aus, deren Größe einem Drittel der Frequenz des Hochfrequenzgenerators 22 entspricht. Die Dauer der Laserlichtimpulse ist dabei so klein gewählt, daß sich die Laserlichtimpulse der drei Laserlichtquellen 1, 1′ nicht überschneiden.

In Figur 3 ist eine Impulssequenz schematisch dargestellt, wobei die Ausgangsimpulse der ersten Laserlichtquelle 1 mit LD1, die der zweiten Laserlichtquelle 1′ mit LD2 und die der dritten Laserlichtquelle mit LD3 bezeichnet und jeweils mit durchgezogenen, punktierten und gestrichelten Linien dargestellt sind.

Es ist klar, daß der Transientenrecorder 19 mit der Frequenz des Hochfrequenzgenerators 22, also mit der dreifachen Frequenz der Pulsfolgefrequenz der Laserlichtquellen 1, 1′ getriggert werden muß.

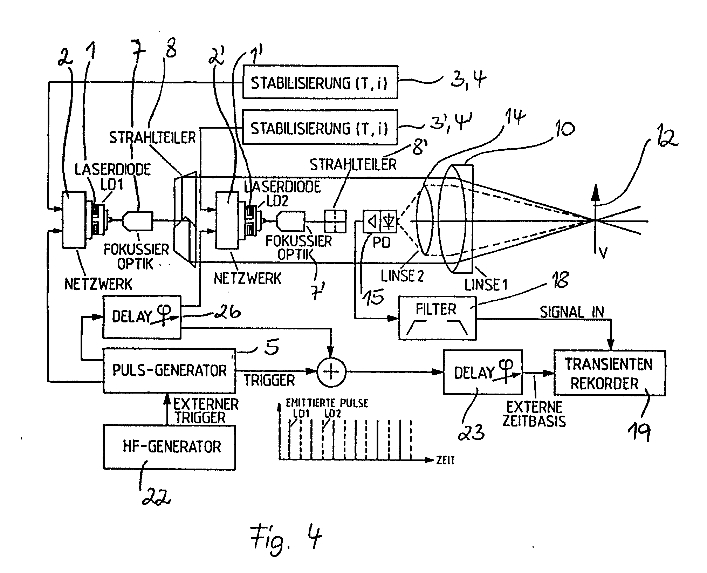

Figur 4 zeigt eine andere Ausführungsform für zwei Laserlichtquellen 1, 1′, in der der Impulsgenerator 5 Impulse mit der Frequenz des Hochfrequenzgenerators 22 erzeugt. Auch hier wird vorausgesetzt, daß die Impulsbreite wesentlich kleiner ist als die Impulspause. Über eine einstellbare Verzögerungsschaltung 26 wird die zweite Laserlichtquelle 1′ in einem derartigen zeitlichen Abstand zur ersten Laserlichtquelle 1 zum Strahlen angeregt, daß die Laserimpulse der beiden Laserlichtquellen 1, 1′ äquidistant ausgesendet werden, wie dies schematisch in Figur 4 dargestellt ist. Die Ausgangsimpulse der ersten Laserlichtquelle sind durchgezogen eingezeichnet und mit LD1 bezeichnet, während die Ausgangsimpulse der zweiten Laserlichtquelle 1′ gestrichelt eingezeichnet und mit LD2 bezeichnet sind.

Der Transientenrecorder 19 wird in diesem Fall durch die in einer Additionsschaltung 27 summierten Impulse des Impulsgenerators sowie der Verzögerungsschaltung 26, also mit der doppelten Frequenz des Hochfrequenzgenerators 22 getriggert.

In den beiden in Figur 3 und 4 dargestellten Ausführungsformen werden die gestreuten Lichtimpulse von der gemeinsamen Photodiode 15 aufgefangen und ausgewertet. Die von dem Transientenrecorder 19 gemessenen Amplituden werden durch eine geeignete Software in einzelnen Geschwindigkeitskomponenten zugeordnet und hinsichtlich der jeweiligen Dopplerfrequenz ausgewertet.

## Ansprüche

1. Verfahren für die Laser-Doppler-Anemometrie mit wenigstens zwei, von einer Laserlichtquelle (1) erzeugten Laserstrahlen (9, 9′), die gemeinsam auf einen Bereich einer partikelenthaltenden Strömung (12) eines Fluids gerichtet werden und deren Streulicht, dessen Frequenz aufgrund der Strömungsgeschwindigkeit um die Dopplerfrequenz verschoben ist, gemessen wird, wobei die Laserstrahlen (9, 9′) gepulst ausgesandt werden, dadurch gekennzeichnet, daß die Pulsfolgefrequenz der Laserstrahlen auf ein Vielfaches der zu beobachtenden Doppler-Frequenz eingestellt wird.

2. Verfahren nach Anspruch 1, gekennzeichnet durch die Verwendung einer Laserdiode als Laserlichtquelle (1).

3. Verfahren nach Anspruch 1 oder 2, dadurch gekennzeichnet, daß die empfangenen Streulichtimpulse in einem Integrator (16) zu kontinuierlichen analogen Meßsignalen geformt werden.

4. Verfahren nach Anspruch 1 oder 2, dadurch gekennzeichnet, daß die Amplituden der jeweiligen Streulichtimpulse in einer Auswertungseinrichtung gemessen und rechnerisch ausgewertet werden.

5. Verfahren nach Anspruch 4, dadurch gekennzeichnet, daß die Amplitudenmessung durch einen Synchronimpuls initiiert wird.

6. Verfahren nach Anspruch 5, dadurch gekennzeichnet, daß der Synchronimpuls und der zu messende Laserimpuls von einem gemeinsamen hochfrequenten Impulsgenerator (22) abgeleitet werden.

7. Verfahren nach einem der Ansprüche 1-6, dadurch gekennzeichnet, daß mehrere Laserlichtquellen (1, 1') für mehrere Geschwindigkeitskomponenten verwendet werden und daß die mehreren Laserlichtquellen (1, 1') so gesteuert werden, daß sie jeweils phasenverschobene Impulse derart ausstrahlen, daß zu jedem Zeitpunkt nur eine Laserlichtquelle strahlt.

8. Verfahren nach Anspruch 7, dadurch gekennzeichnet, daß die Streulichtimpulse aller Laserlichtquellen (1, 1') von einer gemeinsamen Empfangsoptik (15) erfaßt und elektronisch für jede Geschwindigkeitskomponente sortiert werden.

## Claims

1. A method of laser Doppler anemometry comprising at least two laser beams (9, 9') generated by a laser light source (1), which are commonly directed towards a part of a flow (12) of a fluid which contains particles, and the scattered light of which, whose frequency is shifted by the Doppler frequency as a result of the flow speed, is measured, wherein the laser beams (9, 9') are transmitted in pulsed fashion, characterised in that the pulse repetition frequency of the laser beams is set at a multiple of the Doppler frequency which is to be observed.

2. A method as claimed in Claim 1, characterised by the use of a laser diode as laser light source (1).

3. A method as claimed in Claim 1 or 2, characterised in that the received scattered light pulses are formed into continuous analogue measuring signals in an integrator (16).

4. A method as claimed in Claim 1 or 2, characterised in that the amplitudes of the respective scattered light pulses are measured and computer-analysed in an analysis device.

5. A method as claimed in Claim 4, characterised in that the amplitude measurement is initiated by a synchronising pulse.

6. A method as claimed in Claim 5, characterised in that the synchronising pulse and the laser pulse which is to be measured are derived from a common, high frequency pulse generator (22).

7. A method as claimed in one of Claims 1 to 6, characterised in that a plurality of laser light sources (1, 1') are used for a plurality of speed components and that the plurality of laser light sources (1, 1') are controlled such that they each emit phase-shifted pulses in such manner that at any the only one laser light source is operative.

8. A method as claimed in Claim 7, characterised in that the scattered light pulses of all the laser light sources (1, 1') are detected by a common receiving optical unit (15) and are electronically sorted for each speed component.

## Revendications

1. Procédé pour l'anémométrie Doppler laser avec au moins deux faisceaux laser (9, 9') produits par une source de lumière laser (1), qui sont dirigés ensemble vers une zone d'un écoulement (12) d'un fluide contenant des particules, et dont on mesure la lumière diffusée, dont la fréquence est décalée de la fréquence Doppler du fait de la vitesse de l'écoulement, les faisceaux laser (9, 9') étant émis par impulsions, caractérisé en ce que la fréquence de répétition des impulsions des faisceaux laser est réglée à plusieurs fois la fréquence Doppler à observer.

2. Procédé selon la revendication 1, caractérisé par l'utilisation d'une diode laser comme source de lumière laser (1).

3. Procédé selon la revendication 1 ou 2, caractérisé en ce que les impulsions de lumière diffusée reçues sont converties en signaux de mesure analogiques continus dans un intégrateur (16).

4. Procédé selon la revendication 1 ou 2, caractérisé en ce que les amplitudes des différentes impulsions de lumière diffusée sont mesurées dans un dispositif d'évaluation et évaluées par calcul.

5. Procédé selon la revendication 4, caractérisé en ce que la mesure d'amplitude est déclenchée par une impulsion synchrone.

6. Procédé selon la revendication 5, caractérisé en ce que l'impulsion synchrone et l'impulsion laser à mesurer proviennent d'un générateur d'impulsions à haute fréquence commun (22).

7. Procédé selon l'une des revendications 1 à 6, caractérisé en ce que plusieurs sources de lumière laser (1, 1') sont utilisées pour plusieurs composantes de vitesse, et en ce que les sources de lumière laser (1, 1') multiples sont commandées de telle manière qu'elles émettent chacune des impulsions déphasées et qu'une seule source de lumière laser émette à chaque instant.

8. Procédé selon la revendication 7, caractérisé en ce que les impulsions de lumière diffusée de toutes les sources de lumière laser (1, 1') sont captées par une optique de réception commune (15) et triées électroniquement pour chaque composante de vitesse.

Fig 1

**Fig. 2**

LASERDIODE — STRAHLTEILER — STRÖMUNG — STRAHLFALLE — FOKUSSIER OPTIK — NETZWERK — AVALANCHE DIODE — LINSE2 — LINSE 1 — TEMPERATUR-REGLER — FILTER — TRANSIENTEN REKORDER — STROMREGLER — EXTERNE ZEITBASIS — PULSGENERATOR — EXTERNER TRIGGER — HF-GENERATOR — DELAY

Fig. 3

Fig. 4

STABILISIERUNG (T, i) — 3,4

STABILISIERUNG (T, i) — 3',4'

STRAHLTEILER

STRAHLTEILER — 8'

14

10

12

LASERDIODE LD1

LASERDIODE LD2

FOKUSSIER OPTIK

FOKUSSIER OPTIK

NETZWERK

NETZWERK — 7'

PD

LINSE 2

LINSE 1

15

v

DELAY φ — 26

PULS-GENERATOR — 5

TRIGGER

EXTERNER TRIGGER

HF-GENERATOR

22

EMITTIERTE PULSE
LD1   LD2

ZEIT

FILTER — 18

SIGNAL IN

DELAY φ

EXTERNE ZEITBASIS

23

TRANSIENTEN REKORDER

19

EP 0 303 156 B1